# EUROPEAN PATENT APPLICATION

(11) **EP 4 840 921 A1**
(43) Date of publication of application: **18.11.2026**
(21) Application number: 25738942.9
(22) Date of filing: 14.01.2025
(51) Int. Cl.: C09J 201/00, A01N 25/10, A01N 37/40, C09J 11/06, C09J 11/08

(54) **HOT MELT ADHESIVE, METHOD FOR PRODUCING SAME, AND COATING METHOD**

(30) Priority: 12.01.2024 JP 2024003536
(71) Applicant: MORESCO Corporation, Kobe-shi, Hyogo 650-0047 (JP)
(72) Inventor: ONISHI, Tatsuki, Kobe-shi, Hyogo 650-0047 (JP); SAMITSU, Maki, Kobe-shi, Hyogo 650-0047 (JP)
(74) Representative: Steffens, Adrian
(86) International application number: PCT/JP2025/000759
(87) International publication number: WO 2025/150575

(57) **Abstract**

An object is to provide an antibacterial hot-melt adhesive that does not undergo phase separation even when heated for a long time, has high safety for the human body, and is capable of retaining stable antibacterial properties even when heated for a long time. The object is attained by a hot-melt adhesive including: a base polymer; a tackifier; and an antibacterial agent having a paraben structure and having a 10% weight loss temperature of not lower than 200°C in thermogravimetric measurement, the hot-melt adhesive having a melt viscosity at 140°C of not more than 20,000 mPa·s.

## Description

### Technical Field

The present invention relates to a hot-melt adhesive, a method for producing the hot-melt adhesive, and a method for applying the hot-melt adhesive.

### Background Art

Conventionally, when imparting antibacterial properties to a hot-melt adhesive, an inorganic silver-based antibacterial agent (see, for example, Patent Literature 1), triclosan (see, for example, Patent Literature 2), a quaternary ammonium salt (see, for example, Patent Literature 3), and the like have been used as antibacterial agents. In addition, para-hydroxybenzoic acid esters (parabens) are known as antibacterial agents, but use conditions for the para-hydroxybenzoic acid esters are limited.

### Citation List

### [Patent Literature]

[Patent Literature 1]
   Specification of Chinese Patent Application Publication No. 115873558
[Patent Literature 2]
   Published Japanese Translation of PCT International Application Tokuhyo No. 2004-525996
[Patent Literature 3]
   Japanese Patent Application Publication Tokukai No. 2007-51281
[Patent Literature 4]
   Japanese Patent Application Publication Tokukai No. 2020-117567

### Summary of Invention

### Technical Problem

However, the above-described conventional techniques for imparting antibacterial properties to a hot-melt adhesive have room for improvement in terms of providing an antibacterial hot-melt adhesive that does not undergo phase separation even when heated for a long time, has high safety for the human body, and is capable of retaining stable antibacterial properties even when heated for a long time.

Specifically, the technique of adding the inorganic silver-based antibacterial agent described in Patent Literature 1 requires a particle stabilizer, a dispersant, and the like because phase separation occurs under a use environment and precipitation occurs. In addition, triclosan used in the technique described in Patent Literature 2 exhibits endocrine-disrupting action and is said to affect thyroid function and thyroid homeostasis, and there are safety concerns. In addition, the quaternary ammonium salt used in the technique described in Patent Literature 3 has poor long-term heat resistance, and there is concern that phase separation may occur when the quaternary ammonium salt is heated for a long time.

Patent Literature 4 discloses an antibacterial resin composition obtained by melt-kneading a paraben with a low-melting-point thermoplastic resin having a melting point of 65°C to 110°C, but this antibacterial resin composition is not a hot-melt adhesive. Therefore, unlike a hot-melt adhesive, this antibacterial resin composition is not heated for a long time in an open state when applied to a base material.

An object of the present invention is to provide an antibacterial hot-melt adhesive that does not undergo phase separation even when heated for a long time, has high safety for the human body, and is capable of retaining stable antibacterial properties even when heated for a long time.

### Solution to Problem

In order to solve the above problem, a hot-melt adhesive in accordance with an aspect of the present invention is a hot-melt adhesive including: a base polymer; a tackifier; and an antibacterial agent having a paraben structure and having a 10% weight loss temperature of not lower than 200°C in thermogravimetric measurement, the hot-melt adhesive having a melt viscosity at 140°C of not more than 20,000 mPa·s.

In addition, in order to solve the above problem, a method for producing a hot-melt adhesive in accordance with an aspect of the present invention includes a step of kneading an antibacterial agent having a paraben structure and having a 10% weight loss temperature of not lower than 200°C in thermogravimetric measurement and a composition containing a base polymer and a tackifier, while maintaining a temperature of not higher than 140°C.

In addition, in order to solve the above problem, a method for applying a hot-melt adhesive in accordance with an aspect of the present invention includes an application step of melting, at a temperature of not higher than 140°C, a hot-melt adhesive containing an antibacterial agent having a paraben structure and having a 10% weight loss temperature of not lower than 200°C in thermogravimetric measurement, a base polymer, and a tackifier, and applying the molten hot-melt adhesive to a base material.

### Advantageous Effects of Invention

According to an aspect of the present invention, it is possible to provide an antibacterial hot-melt adhesive that does not undergo phase separation even when heated for a long time, has high safety for the human body, and is capable of retaining stable antibacterial properties even when heated for a long time.

### Description of Embodiments

The following description will discuss embodiments of the present invention in detail. Note, however, that the present invention is not limited to the embodiments, but can be altered within this disclosure. The present invention also encompasses, in its technical scope, any embodiment derived by combining technical means disclosed in differing embodiments. Note that the expression "A to B", representing a numerical range, herein means "not less than A and not more than B" unless otherwise specified in the present specification.

### <1. Hot-melt adhesive>

A hot-melt adhesive in accordance with an embodiment of the present invention is a hot-melt adhesive including: a base polymer; a tackifier; and an antibacterial agent having a paraben structure and having a 10% weight loss temperature of not lower than 200°C in thermogravimetric measurement, the hot-melt adhesive having a melt viscosity at 140°C of not more than 20,000 mPa·s.

### <1.1> Base polymer

The base polymer contained in the hot-melt adhesive in accordance with an embodiment of the present invention is not particularly limited. Examples of the base polymer include a styrene-based block copolymer, an olefin-based polymer, an olefin-vinyl acetate copolymer, an olefin-unsaturated carboxylic acid copolymer, an acrylic polymer, an olefin-acrylate copolymer, a polyester-based polymer, a polyamide-based polymer, and a combination of two or more types thereof. Among these, a styrene-based block copolymer, an olefin-based polymer, an olefin-vinyl acetate copolymer, an olefin-unsaturated carboxylic acid copolymer, an acrylic polymer, and a combination of two or more thereof are preferable because of excellent processability and easy availability. The hot-melt adhesive may contain only one type of base polymer or may contain two or more types of base polymers.

Examples of the styrene-based block copolymer include: non-hydrogenated styrene-based block copolymers such as a styrene-butadiene-styrene block copolymer (SBS) and a styrene-isoprene-styrene block copolymer (SIS); and hydrogenated styrene-based block copolymers such as a styrene-ethylene-butylene-styrene block copolymer (SEBS), a styrene-ethylene-propylene-styrene block copolymer (SEPS), and styrene-butene-butylene-styrene (SBBS) (such as hydrides of the above-described non-hydrogenated styrene-based block copolymers). Among these, from the viewpoint of adhesive strength, the styrene-based block copolymer is more preferably a non-hydrogenated (unhydrogenated) styrene-based block copolymer.

Examples of the olefin-based polymer include homopolymers and copolymers of olefin monomers (olefins having 2 to 10 carbon atoms, such as ethylene, propylene, butene, and isobutylene). More specific examples of the olefin-based polymer include poly-α-olefin, amorphous poly-α-olefin (APAO), ethylene/α-olefin copolymer, propylene/α-olefin copolymer, styrene-ethylene-butylene-olefin crystalline block copolymer, random polypropylene, block polypropylene, polypropylene, ethylene/propylene copolymer, ethylene/1-butene copolymer, ethylene/1-hexene copolymer, ethylene/1-octene copolymer, propylene/ethylene copolymer, propylene/ethylene/α-butene copolymer, polybutene, 1-butene/ethylene copolymer, 1-butene/propylene copolymer, propylene/1-butene copolymer, and the like.

Examples of the olefin-vinyl acetate copolymer include an ethylene-vinyl acetate copolymer and the like.

Examples of the olefin-unsaturated carboxylic acid copolymer include an ethylene-methacrylic acid copolymer, an ethylene-acrylic acid copolymer, and the like.

Examples of the olefin-acrylate copolymer include an ethylene-ethyl acrylate copolymer, an ethylene-methyl methacrylate copolymer, and the like.

Examples of the acrylic polymer include acrylic block copolymers (such as a methyl methacrylate-n-butyl acrylate-methyl methacrylate block copolymer and a methyl methacrylate-2-ethylhexyl acrylate-methyl methacrylate block copolymer), polyacrylic acid esters, polymethacrylic acid esters, and the like.

The base polymer in the hot-melt adhesive is more preferably a styrene-based block copolymer, an olefin-based polymer, an olefin-vinyl acetate copolymer, and an acrylic block copolymer, even more preferably a styrene-based block copolymer, an olefin-based polymer, and an olefin-vinyl acetate copolymer, and still more preferably a styrene-based block copolymer.

A lower limit of the content of the base polymer in the hot-melt adhesive can be not less than 5% by weight, not less than 10% by weight, not less than 15% by weight, or not less than 20% by weight, relative to 100% by weight of the hot-melt adhesive. An upper limit of the content of the base polymer in the hot-melt adhesive can be not more than 90% by weight, not more than 60% by weight, not more than 50% by weight, not more than 40% by weight, or not more than 30% by weight, relative to 100% by weight of the hot-melt adhesive. The content of the base polymer of not less than 5% by weight improves adhesiveness of the adhesive.

In a case where the base polymer is a styrene-based block copolymer, the lower limit of the content of the base polymer in the hot-melt adhesive is more preferably not less than 5% by weight, even more preferably not less than 10% by weight, and still more preferably not less than 15% by weight, relative to 100% by weight of the hot-melt adhesive. In the case where the base polymer is a styrene-based block copolymer, the upper limit of the content of the base polymer in the hot-melt adhesive is more preferably not more than 50% by weight, even more preferably not more than 40% by weight, and still more preferably not more than 30% by weight, relative to 100% by weight of the hot-melt adhesive.

In a case where the base polymer is an olefin-based polymer, the lower limit of the content of the base polymer in the hot-melt adhesive is more preferably not less than 15% by weight, even more preferably not less than 20% by weight, and still more preferably not less than 25% by weight, relative to 100% by weight of the hot-melt adhesive. In the case where the base polymer is an olefin-based polymer, the upper limit of the content of the base polymer in the hot-melt adhesive is more preferably not more than 90% by weight, even more preferably not more than 80% by weight, and still more preferably not more than 70% by weight, relative to 100% by weight of the hot-melt adhesive.

In a case where the base polymer is an olefin-vinyl acetate copolymer, the lower limit of the content of the base polymer in the hot-melt adhesive is more preferably not less than 15% by weight, even more preferably not less than 20% by weight, and still more preferably not less than 25% by weight, relative to 100% by weight of the hot-melt adhesive. In the case where the base polymer is an olefin-vinyl acetate copolymer, the upper limit of the content of the base polymer in the hot-melt adhesive is more preferably not more than 70% by weight, even more preferably not more than 60% by weight, and still more preferably not more than 50% by weight, relative to 100% by weight of the hot-melt adhesive.

In a case where the base polymer is an acrylic polymer, the lower limit of the content of the base polymer in the hot-melt adhesive is more preferably not less than 5% by weight, even more preferably not less than 10% by weight, and still more preferably not less than 15% by weight, relative to 100% by weight of the hot-melt adhesive. In the case where the base polymer is an acrylic polymer, the upper limit of the content of the base polymer in the hot-melt adhesive is more preferably not more than 70% by weight, even more preferably not more than 60% by weight, and still more preferably not more than 50% by weight, relative to 100% by weight of the hot-melt adhesive.

### <1.2> Tackifier

The hot-melt adhesive in accordance with an embodiment of the present invention contains a tackifier. The tackifier is not particularly limited, and examples thereof include petroleum-based resins, natural resins, and the like.

Examples of the petroleum-based resin include aliphatic petroleum resins, alicyclic petroleum resins, aromatic petroleum resins, styrene-based resins, and the like. Hydrogenated petroleum-based resins (hydrides of petroleum-based resins) are also used. Examples of the hydrides of petroleum resins include a hydrogenated C9 petroleum resin, a hydrogenated dicyclopentadiene-based petroleum resin (such as a hydrogenated DCPD resin), and the like. Examples of the styrene-based resin include homopolymers of styrene, methylstyrene, vinyltoluene, methoxystyrene, tert-butylstyrene, chlorostyrene, and the like. Hydrogenated styrene-based resins (such as hydrides of styrene-based resins) are also used.

Examples of the natural resin include rosin-based resins, terpene-based resins, and the like. Examples of the rosin-based resin include natural rosins (such as gum rosin, tall rosin, and wood rosin), disproportionated rosins, polymerized rosins, glycerin esters of these rosins, and pentaerythritol esters of these rosins. Hydrogenated rosin-based resins (such as hydrides of rosin-based resins) are also used. Examples of the terpene-based resin include terpene resins, hydrocarbon-modified terpene resins, aromatic-modified terpene resins, and phenol-modified terpene resins. Hydrogenated terpene-based resins (such as hydrides of terpene-based resins) are also used.

The tackifier is more preferably a hydrogenated resin. This is because a tackifier before hydrogenation may have an odor, and hydrogenating the tackifier makes it possible to suppress the odor. In addition, hydrogenation increases the saturated hydrocarbon ratio of the hot-melt adhesive and thus lowers the overall polarity. Thus, affinity for the paraben-based antibacterial agent decreases, and antibacterial properties on an adhesive surface are more readily exhibited. A hydrogenation rate of the tackifier is preferably not less than 50%, and a larger value of the hydrogenation rate is more preferable (for example, not less than 70%, not less than 80%, and not less than 90%).

The hot-melt adhesive in accordance with an embodiment of the present invention may contain only one type of the tackifiers or may contain two or more types of the tackifiers.

A lower limit of the content of the tackifier in the hot-melt adhesive can be more than 0% by weight, not less than 5% by weight, not less than 10% by weight, not less than 15% by weight, or not less than 20% by weight, relative to 100% by weight of the hot-melt adhesive. An upper limit of the content of the tackifier in the hot-melt adhesive can be not more than 80% by weight, not more than 70% by weight, not more than 60% by weight, or not more than 50% by weight, relative to 100% by weight of the hot-melt adhesive. Containing the tackifier in an amount of more than 0% by weight imparts sufficient tackiness to the hot-melt adhesive. In addition, the content of the tackifier of not more than 80% by weight is preferable because the hot-melt adhesive has enhanced flexibility and has enhanced wettability.

In a case where the base polymer is a styrene-based block copolymer, the lower limit of the content of the tackifier in the hot-melt adhesive is more preferably not less than 20% by weight, even more preferably not less than 30% by weight, and still more preferably not less than 40% by weight, relative to 100% by weight of the hot-melt adhesive. In the case where the base polymer is a styrene-based block copolymer, the upper limit of the content of the tackifier in the hot-melt adhesive is more preferably not more than 80% by weight, even more preferably not more than 75% by weight, and still more preferably not more than 70% by weight, relative to 100% by weight of the hot-melt adhesive.

In a case where the base polymer is an olefin-based polymer and an olefin-vinyl acetate copolymer, the lower limit of the content of the tackifier in the hot-melt adhesive is more preferably not less than 5% by weight, even more preferably not less than 10% by weight, and still more preferably not less than 15% by weight, relative to 100% by weight of the hot-melt adhesive. In the case where the base polymer is an olefin-based polymer and an olefin-vinyl acetate copolymer, the upper limit of the content of the tackifier in the hot-melt adhesive is more preferably not more than 80% by weight, even more preferably not more than 70% by weight, and still more preferably not more than 60% by weight, relative to 100% by weight of the hot-melt adhesive.

In a case where the base polymer is an acrylic block copolymer, the lower limit of the content of the tackifier in the hot-melt adhesive is more preferably not less than 20% by weight, even more preferably not less than 25% by weight, and still more preferably not less than 30% by weight, relative to 100% by weight of the hot-melt adhesive. In the case where the base polymer is an acrylic block copolymer, the upper limit of the content of the tackifier in the hot-melt adhesive is more preferably not more than 80% by weight, even more preferably not more than 70% by weight, and still more preferably not more than 60% by weight, relative to 100% by weight of the hot-melt adhesive.

### <1.3> Antibacterial agent

The hot-melt adhesive in accordance with an embodiment of the present invention contains an antibacterial agent having a paraben structure and having a 10% weight loss temperature of not lower than 200°C in thermogravimetric measurement (TG measurement).

Here, the 10% weight loss temperature in TG measurement means a temperature at a time point at which, in TG measurement when the temperature of the antibacterial agent having a paraben structure is increased at 10°C/min, the weight has decreased by 10% by weight relative to the weight before the temperature increase (that is, the weight of the antibacterial agent having a paraben structure has become 90% relative to the weight before the temperature increase). Hereinafter, in the present specification, the 10% weight loss temperature in TG measurement may be referred to as "T10".

The T10 of the antibacterial agent having a paraben structure only needs to be not lower than 200°C, and is more preferably not lower than 205°C, and even more preferably not lower than 210°C. In a case where the T10 of the antibacterial agent having a paraben structure is not lower than 200°C, the antibacterial agent can remain even when heating is carried out for a long time. Therefore, it is possible to provide a hot-melt adhesive having antibacterial properties. The upper limit of the T10 of the antibacterial agent having a paraben structure is preferably higher from the viewpoint of causing the antibacterial agent to remain even when heating is carried out for a long time, and is, for example, not higher than 300°C. From the viewpoint of antibacterial activity, the T10 of the antibacterial agent is more preferably not higher than 250°C, even more preferably not higher than 245°C, and particularly preferably not higher than 240°C.

The antibacterial agent having a paraben structure and having a T10 of not lower than 200°C may be a para-hydroxybenzoic acid ester having a T10 of not lower than 200°C.

The para-hydroxybenzoic acid ester is preferably, for example, an ester of para-hydroxybenzoic acid and a hydrocarbon group having 4 to 15 carbon atoms (provided that when the number of carbon atoms of the hydrocarbon group is 4, a linear saturated hydrocarbon group is excluded), more specifically an ester of para-hydroxybenzoic acid and a hydrocarbon group having 4 to 15 carbon atoms (provided that when the hydrocarbon group is an alkyl group having 4 carbon atoms, an n-butyl group is excluded). More preferable examples of the para-hydroxybenzoic acid ester include para-hydroxybenzoic acid alkyl esters in which the alkyl group has 6 to 14 carbon atoms, para-hydroxybenzoic acid benzyl esters, and the like. The alkyl group of the alkyl ester may be linear, branched, or cyclic, and examples thereof include an isobutyl group (2-methylpropyl group), an n-pentyl group, a 2-methylbutyl group, an isopentyl group (3-methylbutyl group), a neopentyl group, an n-hexyl group, an isohexyl group, a cyclohexyl group, an n-heptyl group, an n-octyl group, a 2-ethylhexyl group, an n-nonyl group, an n-decyl group, an n-undecyl group, an n-dodecyl group, an n-tridecyl group, an n-tetradecyl group, an n-pentadecyl group, an n-hexadecyl group, and the like. Among these, from the viewpoints of antibacterial properties and stability under heating, the antibacterial agent having a paraben structure used in an embodiment of the present invention is preferably n-hexyl para-hydroxybenzoate (NHPB), 2-ethylhexyl para-hydroxybenzoate (EHPB), n-hexadecyl para-hydroxybenzoate (CEPB), benzyl para-hydroxybenzoate (POB-Bz), and the like, and more preferably n-hexyl para-hydroxybenzoate and/or benzyl para-hydroxybenzoate. The para-hydroxybenzoic acid ester may be used alone or in combination of two or more types thereof. In a case where two or more types of para-hydroxybenzoic acid esters are mixed, the T10 of the entire mixture of the para-hydroxybenzoic acid esters only needs to be not lower than 200°C, and the T10 of each para-hydroxybenzoic acid ester is more preferably not lower than 200°C.

A lower limit of the content of the antibacterial agent in the hot-melt adhesive is preferably not less than 0.5% by weight, more preferably not less than 1% by weight, and still more preferably not less than 1.5% by weight, and can be not less than 2% by weight, relative to 100% by weight of the hot-melt adhesive. The content of the antibacterial agent of not less than 0.5% by weight is preferable because of imparting sufficient antibacterial properties. An upper limit of the content of the antibacterial agent in the hot-melt adhesive can be not more than 20% by weight or not more than 10% by weight, relative to 100% by weight of the hot-melt adhesive. The content of the antibacterial agent of not more than 20% by weight suppresses softening of the hot-melt adhesive, and thus is suitable for a hot-melt adhesive. The hot-melt adhesive in accordance with an embodiment of the present invention may contain an antibacterial agent differing from the above-described antibacterial agents to such an extent that performance is not impaired. The content of the antibacterial agent differing from the above-described antibacterial agent is preferably not more than 1% by weight, and more preferably not more than 0.5% by weight, relative to 100% by weight of the hot-melt adhesive.

### <1.4> Plasticizer

The plasticizer is not particularly limited, and examples thereof include oils such as mineral oil, synthetic oil, and vegetable oil.

Examples of the mineral oil include paraffinic oil, naphthenic oil, liquid paraffin, and the like. Examples of paraffin contained in the paraffinic oil include n-paraffin, isoparaffin, and derivatives of these saturated hydrocarbons. Examples of naphthene contained in the naphthenic oil include cyclopropane, cyclobutane, cyclopentane, cyclohexane, cycloheptane, cyclooctane, and the like. The paraffinic oil is an oil containing a relatively large amount of paraffin, and the naphthenic oil is an oil containing a relatively large amount of naphthene.

Specific examples of the synthetic oil include ether oil, ester oil, phosphate ester, chlorinated paraffin, ethylene-α-olefin oligomer, polybutene, low-molecular-weight polybutadiene, polyisoprene, and hydrogenated products thereof, which are in liquid form at 25°C. Examples of the ester oil include fatty acid ester and the like. Specific examples of the fatty acid ester include isopropyl myristate, octyldodecyl myristate, glyceryl triisooctanoate, diisopropyl adipate, diethyl sebacate, dibutyl sebacate, dioctyl sebacate, dodecyl sebacate, cetyl ethylhexanoate, cetyl palmitate, ethylhexyl palmitate, isopropyl palmitate, tributyl acetyl-citrate, medium-chain fatty acid triglyceride, ethylene glycol salicylate, glycol distearate, and the like.

Specific examples of the vegetable oil include olive oil, rice germ oil, corn oil, sasanqua oil, camellia oil, castor oil, jojoba seed oil, eucalyptus leaf oil, and derivatives thereof (including hardened oil).

A lower limit of the content of the plasticizer in the hot-melt adhesive can be not less than 0% by weight, not less than 5% by weight, not less than 7% by weight, or not less than 10% by weight, where the weight of the hot-melt adhesive is regarded as 100% by weight. An upper limit of the content of the plasticizer in the hot-melt adhesive can be not more than 60% by weight, not more than 40% by weight, not more than 25% by weight, not more than 15% by weight, or not more than 10% by weight, where the weight of the hot-melt adhesive is regarded as 100% by weight. Containing the plasticizer in an amount of not less than 10% by weight relative to the hot-melt adhesive is preferable because the melt viscosity of the hot-melt adhesive can be adjusted within an appropriate range. In addition, the content of the plasticizer of not more than 60% by weight makes it possible to impart sufficient cohesive power to the hot-melt adhesive. The hot-melt adhesive in accordance with an embodiment of the present invention may contain only one type of the plasticizers or may contain two or more types of the plasticizers. The hot-melt adhesive does not necessarily have to contain a plasticizer.

In a case where the base polymer is a styrene-based block copolymer, the lower limit of the content of the plasticizer in the hot-melt adhesive is more preferably not less than 5% by weight, even more preferably not less than 10% by weight, and still more preferably not less than 15% by weight, relative to 100% by weight of the hot-melt adhesive. In the case where the base polymer is a styrene-based block copolymer, the upper limit of the content of the plasticizer in the hot-melt adhesive is more preferably not more than 30% by weight, even more preferably not more than 25% by weight, and still more preferably not more than 20% by weight, relative to 100% by weight of the hot-melt adhesive.

In a case where the base polymer is an olefin-based polymer and/or an olefin-vinyl acetate copolymer, the plasticizer does not necessarily have to be contained. In the case where the base polymer is an olefin-based polymer and/or an olefin-vinyl acetate copolymer, the upper limit of the content of the plasticizer in the hot-melt adhesive is more preferably not more than 55% by weight, even more preferably not more than 50% by weight, and still more preferably not more than 45% by weight, relative to 100% by weight of the hot-melt adhesive.

In a case where the base polymer is an acrylic block copolymer, the lower limit of the content of the plasticizer in the hot-melt adhesive is more preferably not less than 5% by weight, even more preferably not less than 10% by weight, and still more preferably not less than 15% by weight, relative to 100% by weight of the hot-melt adhesive. In the case where the base polymer is an acrylic block copolymer, the upper limit of the content of the plasticizer in the hot-melt adhesive is more preferably not more than 50% by weight, even more preferably not more than 40% by weight, and still more preferably not more than 30% by weight, relative to 100% by weight of the hot-melt adhesive.

### <1.5> Wax

Examples of the wax include animal wax, vegetable wax, polyolefin-based wax, mineral wax, and synthetic wax. The wax is an organic substance that is solid at an ordinary temperature, becomes liquid when heated, and has a weight average molecular weight of less than 10,000, and is generally regarded as a "wax". The wax is not particularly limited as long as the wax has wax-like properties, and the hot-melt adhesive in accordance with the present invention can be obtained.

Examples of the animal wax include shellac wax and beeswax. Examples of the vegetable wax include carnauba wax, rice wax, and sumac wax. Examples of the polyolefin-based wax include polyethylene wax, polypropylene wax, and ethylene-vinyl acetate copolymer-based wax. Examples of the mineral wax include paraffin wax and microcrystalline wax. Examples of the synthetic wax include Fischer-Tropsch wax (FT wax). The wax is preferably an aliphatic hydrocarbon-based wax. Among the above-described waxes, polyolefin-based wax, paraffin wax, microcrystalline wax, and Fischer-Tropsch wax correspond to the aliphatic hydrocarbon-based wax. Only one type of wax may be used, or two or more types of waxes may be used in combination.

A lower limit of the content of the wax in the hot-melt adhesive can be not less than 0% by weight, not less than 0.1% by weight, not less than 0.3% by weight, or not less than 0.5% by weight, where the weight of the hot-melt adhesive is regarded as 100% by weight. An upper limit of the content of the wax in the hot-melt adhesive can be not more than 80% by weight, not more than 75% by weight, not more than 70% by weight, or not more than 65% by weight, where the weight of the hot-melt adhesive is regarded as 100% by weight. In a case where the content of the wax is within the above range, there is an advantage that both adhesive strength and antibacterial properties are easily achieved. The hot-melt adhesive does not necessarily have to contain wax.

### <1.6> Other components

The hot-melt adhesive in accordance with an embodiment of the present invention may contain a component other than the base polymer, the tackifier, the antibacterial agent, the plasticizer, and the wax. Examples of such a component include an antioxidant, a stabilizer, a filler, a colorant, an ultraviolet absorber, a surfactant, an antistatic agent, a flame retardant, a perfume, a coupling agent, and the like. The other component is also referred to as an additive. The content of the other component is not more than 10% by weight relative to 100% by weight of the hot-melt adhesive.

### (Antioxidant)

Examples of the antioxidant include a phenol-based antioxidant, a phosphorus-based antioxidant, and a sulfur-based antioxidant. Examples of the phenol-based antioxidant include 2,6-di-tert-butyl-4-methylphenol, n-octadecyl-3-(3,5-di-tert-butyl-4-hydroxyphenyl)propionate, 2-tert-butyl-6-(3-tert-butyl-2-hydroxy-5-methylbenzyl)-4-methylphenyl acrylate, tetrakis[methylene-3-(3,5-di-tert-butyl-4-hydroxyphenyl)propionate]methane, and the like. Examples of the phosphorus-based antioxidant include tris(2,4-di-t-butylphenyl)phosphite, bis(2,4-di-t-butylphenyl)pentaerythritol diphosphite, and the like. Examples of the sulfur-based antioxidant include dilauryl 3,3'-thiodipropionate, dimyristyl 3,3'-thiodipropionate, distearyl 3,3'-thiodipropionate, pentaerythrityl tetrakis(3-laurylthiopropionate), and the like. Only one type of these antioxidants may be used, or two or more types of these antioxidants may be used in combination. Alternatively, a phenol-based antioxidant, which is a primary antioxidant, may be used in combination with a phosphorus-based antioxidant or sulfur-based antioxidant, which is a secondary antioxidant.

### (Others)

Examples of the stabilizer include 1,3,5-trimethyl-2,4,6-tris(3,5-di-t-butyl-4-hydroxybenzyl)benzene, pentaerythrityl tetrakis-3-(3,5-di-t-butyl-4-hydroxyphenyl)propionate, pentaerythritol tetrakis(3-laurylthiodipropionate), and the like.

Examples of the filler include talc, calcium carbonate, clay silica, mica, wollastonite, feldspar, aluminum silicate, and the like.

Examples of the colorant include a pigment, a dye, and the like.

### <1.7> Hot-melt adhesive

The hot-melt adhesive is an adhesive that is solid at an ordinary temperature and that can be applied to an adherend by heating and melting a resin. Since the hot-melt adhesive is solvent-free, there is no possibility that a solvent remains in an adhesive layer. Therefore, the hot-melt adhesive can suppress adverse effects such as skin irritation caused by a solvent and can be suitably used in applications involving contact with a living body such as skin. In addition, the formation of an adhesive layer with use of the hot-melt adhesive does not require a drying step for volatilizing a solvent. Thus, the hot-melt adhesive is also suitable for improving productivity.

The melt viscosity at 140°C of the hot-melt adhesive in accordance with an embodiment of the present invention only needs to be not more than 20,000 mPa·s, and is more preferably not more than 15,000 mPa·s, and still more preferably not more than 10,000 mPa·s. Usually, a hot-melt adhesive is melted and applied at approximately 160°C. However, a hot-melt adhesive having a melt viscosity at 140°C of not more than 20,000 mPa·s is preferable because such a hot-melt adhesive has excellent coatability due to low viscosity even when maintained at a low temperature of 140°C, and the molten hot-melt adhesive can be stably applied to an adherend. A lower limit of the melt viscosity at 140°C of the hot-melt adhesive in accordance with an embodiment of the present invention is not particularly limited, and is preferably not less than 500 mPa·s, and more preferably not less than 600 mPa·s. In a case where the melt viscosity at 140°C is not less than 500 mPa·s, there is an advantage that equipment contamination caused by seepage from a base material during the application is suppressed.

In the hot-melt adhesive in accordance with an embodiment of the present invention, the ratio of the amount of saturated hydrocarbons (saturated hydrocarbon ratio) defined by the following formula (1) is preferably not less than 25% by weight, more preferably not less than 40% by weight, and still more preferably 50% by weight. The upper limit of the saturated hydrocarbon ratio is not particularly limited, and may be not more than 100% by weight or not more than 90% by weight. In a case where the saturated hydrocarbon ratio of the hot-melt adhesive is not less than 25% by weight, antibacterial properties are more readily exhibited. 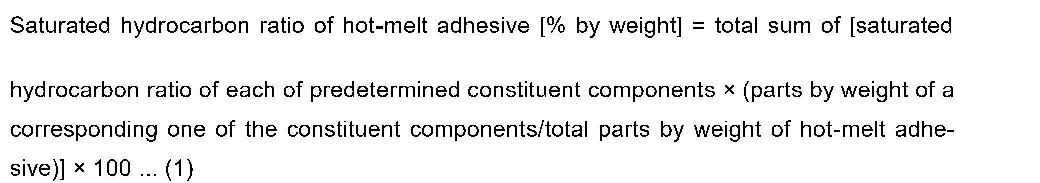 Saturated hydrocarbon ratio of hot-melt adhesive [% by weight] = total sum of [saturated hydrocarbon ratio of each of predetermined constituent components × (parts by weight of a corresponding one of the constituent components/total parts by weight of hot-melt adhesive)] × 100 ... (1)

The "predetermined constituent components" referred to herein intends to mean the base polymer and the tackifier, which constitute the hot-melt adhesive, and, in a case where the plasticizer and/or the wax is/are included in the hot-melt adhesive, the plasticizer and/or the wax. The "saturated hydrocarbon ratio of each of predetermined constituent components" means any of the following ratios (a) and (b) of saturated hydrocarbon portions contained in the corresponding one of these "predetermined constituent components". The saturated hydrocarbon portion may have any structure of a linear structure, a branched structure, and a cyclic structure.
(a) The saturated hydrocarbon ratio of the base polymer is a ratio (% by weight) of repeating units consisting only of saturated hydrocarbons in the base polymer.
(b) The saturated hydrocarbon ratio of the tackifier, the plasticizer, or the wax is a ratio (% by weight) of saturated hydrocarbon portions in a hydrocarbon compound consisting only of carbon atoms and hydrogen atoms.

For the saturated hydrocarbon ratio of the tackifier, the plasticizer, and the wax, the saturated hydrocarbon ratio only in a hydrocarbon compound consisting of carbon atoms and hydrogen atoms is counted. In a case where the tackifier, the plasticizer, and the wax are compounds containing atoms other than carbon atoms and hydrogen atoms, the saturated hydrocarbon ratio is not counted. The hydrocarbon compound consisting of carbon atoms and hydrogen atoms may have any structure of a linear structure, a branched structure, or a cyclic structure, and is, for example, an alkane, an alkene, or an alkyne. A hydrocarbon compound having not less than 20 carbon atoms is preferable.

For example, in a case where the base polymer is an ethylene-vinyl acetate copolymer, the percentage content of ethylene units corresponds to the saturated hydrocarbon ratio. In a case where the base polymer is SIS, the saturated hydrocarbon ratio is 0% by weight because both a styrene unit and an isoprene unit are unsaturated hydrocarbons.

For example, in a case where the plasticizer is a mineral oil, the proportions of a paraffinic carbon content, a naphthenic carbon content, and an aromatic carbon content in the mineral oil are calculated as %CP, %CN, and %CA, respectively, by ring analysis (n-d-M method), and the sum of %CP and %CN among those proportions corresponds to the saturated hydrocarbon ratio. In a case where the plasticizer is dioctyl sebacate, the saturated hydrocarbon ratio is 0% by weight because the plasticizer has oxygen atoms in the molecule.

For example, in a case where the tackifier is a partially hydrogenated petroleum resin, the proportion of saturated hydrocarbons contained in the resin calculated by GPC measurement described later corresponds to the saturated hydrocarbon ratio. In a case where the tackifier is a rosin ester resin, the saturated hydrocarbon ratio is 0% by weight because oxygen atoms are included in the compound. That is, in a case where the tackifier is a compound that contains atoms other than carbon atoms and hydrogen atoms, the saturated hydrocarbon portion is 0% by weight because the saturated hydrocarbon ratio is not counted.

In a case where the tackifier is a partially hydrogenated petroleum resin, the saturated hydrocarbon ratio is calculated from the degree of hydrogenation. The degree of hydrogenation is obtained by GPC measurement and is known as an index correlated with the percentage content of hydrocarbons having multiple bonds (unsaturated hydrocarbons). The degree of hydrogenation is determined by [(area of ultraviolet (wavelength of 265 nm) absorption of material)/(peak area detected by differential refractometer)]. For example, in a case where the degree of hydrogenation of an unhydrogenated resin is 15 and the degree of hydrogenation of a fully hydrogenated resin is 0, the saturated hydrocarbon ratio of a partially hydrogenated resin can be calculated using formula (2). 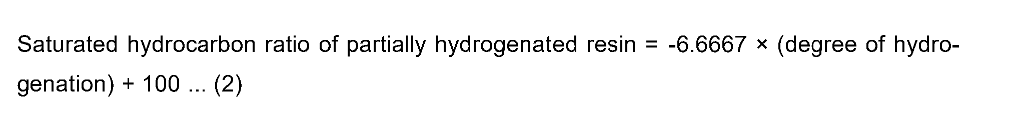 Saturated hydrocarbon ratio of partially hydrogenated resin = -6.6667 × (degree of hydrogenation) + 100 ... (2)

The degree of hydrogenation in the present specification was determined as a value in terms of standard polystyrene by performing gel permeation chromatography (GPC) analysis under the following conditions. Ultraviolet absorption was measured using a light source of 265 nm.
· Apparatus: LC-20AD (manufactured by Shimadzu Corporation)
· Differential refractometer: RID-20A (manufactured by Shimadzu Corporation) · Ultraviolet absorption detector: SPD-M20A (manufactured by Shimadzu Corporation) · Column: ResiPore (manufactured by Agilent Technologies, Inc.)
· Solvent: chloroform (manufactured by Kishida Chemical Co., Ltd., for GPC analysis) · Sample concentration: 20.0 mg/ml
· Flow rate: 1.0 ml/min
· Measurement temperature: 40°C

The inventors of the present invention found that, in a case where an adhesive layer is formed using a hot-melt adhesive having a saturated hydrocarbon ratio of not less than 25% by weight, the antibacterial agent tends to bleed out to the surface of the adhesive layer more easily than in a case where an adhesive layer is formed using a hot-melt adhesive having a saturated hydrocarbon ratio of less than 25% by weight. This is presumed to be because the polarity of the hot-melt adhesive decreased, affinity for the paraben-based antibacterial agent decreased, and antibacterial properties were more readily exhibited on the adhesive layer surface. In addition, this action is presumed to cause a tendency for controlled release properties of the antibacterial agent to increase. Therefore, it is considered that, in a case where the saturated hydrocarbon ratio of the hot-melt adhesive is within the above-described range, the antibacterial properties of the hot-melt adhesive are improved.

As described above, the hot-melt adhesive in accordance with an embodiment of the present invention is substantially free of a solvent. Here, substantially free of a solvent means that the upper limit of the percentage content of a solvent is preferably less than 0.5% by weight, and more preferably less than 0.1% by weight, where the weight of the hot-melt adhesive is regarded as 100% by weight.

### <1.8> Use of hot-melt adhesive

The use of the hot-melt adhesive in accordance with an embodiment of the present invention is not particularly limited. For example, the hot-melt adhesive can be used in the production of sanitary articles (such as paper diapers, sanitary napkins, pet sheets, urine pads, and breast milk pads), industrial filters for air conditioners, air purifiers, and the like, and bath mats. The hot-melt adhesive can be used as a general-purpose hot-melt adhesive in, for example, production of disposable hygiene articles containing nonwoven fabric; paper processing; flexible packaging; woodworking; sealing of cartons and cases; labeling; other assembly applications; and the like. In particular, the hot-melt adhesive can be suitably used in bonding of nonwoven fabric in disposable diapers and sanitary napkins containing nonwoven fabric as a constituent material; bonding of elastic accessories in diapers and adult incontinence briefs; stabilization of cores of diapers and napkins; bonding of backsheet laminates of diapers; processing of industrial filter materials; combination of surgical gowns and surgical drapes; processing of bath mats; and the like. In the case of paper diapers, the hot-melt adhesive composition can be used in, for example, bonding of a top sheet and an absorbent body (such as pulp or tissue).

### <2. Method for producing hot-melt adhesive>

A method for producing a hot-melt adhesive in accordance with an embodiment of the present invention includes a step of kneading an antibacterial agent having a paraben structure and having a 10% weight loss temperature of not lower than 200°C in thermogravimetric measurement and a composition containing a base polymer and a tackifier, while maintaining a temperature of not higher than 140°C. Note here that "kneading while maintaining a temperature of not higher than 140°C" intends to mean kneading in a state in which the temperature of an object to be kneaded is not higher than 140°C, and does not include passing through a region of not higher than 140°C in a process of heating to a temperature of not lower than 140°C. Kneading the antibacterial agent having a paraben structure and the composition containing the base polymer and the tackifier while maintaining a temperature of not higher than 140°C is preferable because vaporization of the antibacterial agent having a paraben structure during kneading can be prevented. In fact, in a case where an antibacterial agent having a paraben structure (for example, NHPB) was kneaded at 160°C for 1 hour, vaporization was observed, whereas in a case where the antibacterial agent was kneaded at 140°C, vaporization was not observed, and suppression of vaporization was confirmed.

The antibacterial agent having a paraben structure, the base polymer, and the tackifier are as described under the section <1. Hot-melt adhesive>. In a case where the melt viscosity at 140°C of the hot-melt adhesive is not more than 20,000 mPa·s, easy stirring and uniform melt mixing can be achieved even when a temperature of not higher than 140°C is maintained. In addition, as described above, the composition containing the base polymer and the tackifier may contain a plasticizer, a wax, and/or other component.

A method for performing kneading while maintaining a temperature of not higher than 140°C is not particularly limited, and examples thereof include a method of mixing the components by heat-kneading the components using a stirring kneader, a roller, a Banbury mixer, a kneader, an extruder, or the like.

In the method for producing a hot-melt adhesive in accordance with an embodiment of the present invention, the temperature during kneading of the antibacterial agent having a paraben structure and having a 10% weight loss temperature of not lower than 200°C in thermogravimetric measurement only needs to be not higher than 140°C. Thus, (1) a method may be employed in which the antibacterial agent and the composition containing the base polymer and the tackifier are all mixed simultaneously and kneaded at a temperature of not higher than 140°C, or (2) a method may be employed in which a composition containing components, such as the base polymer and the tackifier, except for the antibacterial agent is mixed and kneaded in advance, and then the antibacterial agent is added and kneaded at a temperature of not higher than 140°C. In a case where the method (2) is employed, the composition containing the base polymer and the tackifier may be mixed in advance and kneaded at a temperature exceeding 140°C, as long as the temperature of the kneaded product after the addition of the antibacterial agent is maintained at a temperature of not higher than 140°C. In a case where components that are less susceptible to temperatures are mixed at a high temperature, the time required for mixing can be shortened. In addition, the order of addition of the base polymer, the tackifier, and other components used as necessary in a case where the composition containing the base polymer and the tackifier is mixed in advance is not particularly limited. All components of the composition may be mixed simultaneously, the base polymer may be mixed after each component of the composition except for the base polymer has been mixed, or a reverse order may be employed. Alternatively, as long as kneading is performed while maintaining a temperature of not higher than 140°C, another component may be added after the antibacterial agent and kneaded.

In an embodiment of the present invention, examples of the method for producing a hot-melt adhesive include a method including: a step of mixing and melting each component of the hot-melt adhesive except for the antibacterial agent; and a step of adding the antibacterial agent to a molten product of the composition obtained in the preceding step and kneading and dispersing the antibacterial agent at a temperature of not higher than 140°C. In the above-described method, the step of mixing and melting each component of the hot-melt adhesive except for the antibacterial agent is carried out by, for example, stirring each component in a heated state. Examples of the heating temperature at this time can include, but not limited to, 100°C to 200°C, and the time is, for example, 30 minutes to 10 hours. The step of adding the antibacterial agent to the obtained molten product of the composition and kneading and dispersing the antibacterial agent is usually carried out by adding the antibacterial agent to the obtained molten product of the composition after the temperature has been lowered, and kneading the antibacterial agent in a heated state. With regard to the heating temperature in the dispersing step, a temperature of not higher than 140°C only needs to be maintained, and examples of the lower limit of the heating temperature include, but not particularly limited to, 80°C. In addition, the time of the dispersing step is, for example, 15 minutes to 6 hours.

In addition, the method for producing a hot-melt adhesive in accordance with an embodiment of the present invention may be a method including: a step of mixing and melting each component of the hot-melt adhesive except for the base polymer and the antibacterial agent; a step of mixing the base polymer into the obtained molten product; and a step of adding the antibacterial agent to the molten product of the composition obtained in the preceding step and kneading and dispersing the antibacterial agent at a temperature of not higher than 140°C.

### <3. Method for applying hot-melt adhesive>

A method for applying a hot-melt adhesive in accordance with an embodiment of the present invention includes an application step of melting, while maintaining a temperature of not higher than 140°C, a hot-melt adhesive containing an antibacterial agent having a paraben structure and having a 10% weight loss temperature of not lower than 200°C in thermogravimetric measurement, a base polymer, and a tackifier, and applying the molten hot-melt adhesive to a base material.

Here, the hot-melt adhesive containing the antibacterial agent having a paraben structure, the base polymer, and the tackifier is as described above.

Usually, the application step is continued for a long time, from several hours to several tens of hours, in an open state. Thus, the hot-melt adhesive is heated for a long time by melting a large amount of the hot-melt adhesive all at once or by replenishing the hot-melt adhesive during the application step. In addition, in a case where heating is carried out in an open state, the components in the hot-melt adhesive are in a state of being easily vaporized. In the application step, stable antibacterial properties can be retained even when the hot-melt adhesive is heated for a long time by preventing the hot-melt adhesive from exceeding 140°C. In particular, in a case where the hot-melt adhesive is heated for a long time in an open state, an effect of suppressing a decrease in antibacterial activity due to vaporization of the antibacterial agent is remarkably observed.

The application step is a step of applying the molten hot-melt adhesive to a base material (adherend). In the application step, for example, the hot-melt adhesive in a molten state is applied to a first adherend. Next, a second adherend is brought into contact with the first adherend in a state in which the hot-melt adhesive is applied to the first adherend. By allowing this state to stand, the hot-melt adhesive is cooled and solidified. As a result, the first adherend and the second adherend are bonded to each other.

The method for applying the molten hot-melt adhesive to an adherend is not particularly limited. Examples of the method include a contact application method and a non-contact application method. The contact application method refers to an application method in which, when applying a hot-melt adhesive composition, an apparatus used for application (such as a coating machine) is in contact with the adherend. Specific examples of the contact application method include slot coating, roll coater coating, and the like. The non-contact application method refers to an application method in which, when applying the hot-melt adhesive, an apparatus used for application is not in contact with the adherend. Specific examples of the non-contact application method include spiral coating, spray coating, bead coating, and the like. For the hot-melt adhesive in accordance with an embodiment of the present invention, spiral coating can be suitably used. Spiral coating is a method of applying an adhesive in a spiral manner with air on a noncontact basis by intermittent or continuous coating.

### <Summary>

An embodiment of the present invention includes the following configurations:
<1> A hot-melt adhesive including: a base polymer; a tackifier; and an antibacterial agent having a paraben structure and having a 10% weight loss temperature of not lower than 200°C in thermogravimetric measurement, the hot-melt adhesive having a melt viscosity at 140°C of not more than 20,000 mPa·s.
<2> The hot-melt adhesive described in <1>, wherein the hot-melt adhesive has a saturated hydrocarbon ratio of not less than 25% by weight, the saturated hydrocarbon ratio defined by the following formula (1): 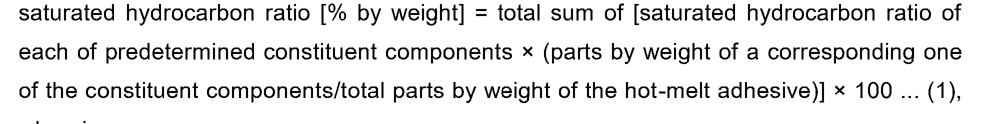 saturated hydrocarbon ratio [% by weight] = total sum of [saturated hydrocarbon ratio of each of predetermined constituent components × (parts by weight of a corresponding one of the constituent components/total parts by weight of the hot-melt adhesive)] × 100 ... (1),
wherein
in the formula (1), the predetermined constituent components are the base polymer and the tackifier, which constitute the hot-melt adhesive, and, in a case where a plasticizer and/or a wax is/are included in the hot-melt adhesive, the plasticizer and/or the wax,
in the formula (1), the saturated hydrocarbon ratio of each of the predetermined constituent components is any of the following ratios (a) and (b) of saturated hydrocarbon portions contained in the corresponding one of the predetermined constituent components:
   (a) the saturated hydrocarbon ratio of the base polymer is a ratio (% by weight) of repeating units consisting only of saturated hydrocarbons in the base polymer; and
   (b) the saturated hydrocarbon ratio of the tackifier, the plasticizer, or the wax is a ratio (% by weight) of saturated hydrocarbon portions in a hydrocarbon compound consisting only of carbon atoms and hydrogen atoms.
<3> The hot-melt adhesive described in <1> or <2>, wherein the amount of addition of the antibacterial agent is not less than 1% by weight relative to the hot-melt adhesive.
<4> A sanitary article including the hot-melt adhesive described in any of <1> to <3>.
<5> A method for producing a hot-melt adhesive, the method including
   a step of kneading an antibacterial agent having a paraben structure and having a 10% weight loss temperature of not lower than 200°C in thermogravimetric measurement and a composition containing a base polymer and a tackifier, while maintaining a temperature of not higher than 140°C.
<6> A method for applying a hot-melt adhesive, the method including
   an application step of melting, at a temperature of not higher than 140°C, a hot-melt adhesive containing an antibacterial agent having a paraben structure and having a 10% weight loss temperature of not lower than 200°C in thermogravimetric measurement, a base polymer, and a tackifier, and applying the molten hot-melt adhesive to a base material.

### Examples

The present invention will be more specifically described below with reference to Examples. Note, however, that the present invention is not limited to such Examples.

The hot-melt adhesives obtained in Examples and Comparative Examples were evaluated by the following methods.

### [Compatibility test]

### <Test method>

50 g of each hot-melt adhesive obtained in Examples and Comparative Examples was placed in a glass bottle, and the glass bottle was allowed to stand still in a constant temperature bath at 180°C for 24 hours. The presence or absence of phase separation and precipitation was observed before and after the test.

### <Evaluation criteria for compatibility>

Compatibility was evaluated on the basis of the following criteria.
A: Neither phase separation nor precipitation is present.
B: At least one of phase separation and precipitation is present.

### [Antibacterial properties test]

### <Preparation of test piece>

Each hot-melt adhesive obtained in Examples and Comparative Examples was formed into a film having a film thickness of 10 mm, cut into a 50 mm × 50 mm square, and used as a test piece.

### <Test method>

The antibacterial properties test was performed in accordance with JIS Z 2801.

### <Evaluation criteria for antibacterial properties>

Antibacterial properties were evaluated on the basis of the following criteria. Note that an antibacterial activity value R was calculated in accordance with JIS Z 2801 and is expressed as a reference value, but the presence or absence of antibacterial properties was evaluated in terms of the following antibacterial properties (%).

### (Antibacterial properties (%))

The antibacterial properties (%) are an index focusing on the effect of inhibiting bacteria on an untreated test piece after the test, and are represented by the following formula: 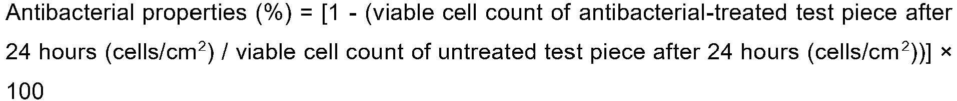 Antibacterial properties (%) = [1 - (viable cell count of antibacterial-treated test piece after 24 hours (cells/cm2) / viable cell count of untreated test piece after 24 hours (cells/cm2))] × 100

In a case where the antibacterial properties were not less than 40% against at least one of Escherichia coli, Staphylococcus aureus, and Candida, it was evaluated that the antibacterial properties are present.

### [Checking of vaporization during preparation of hot-melt adhesive]

In Examples and Comparative Examples, an antibacterial agent was added to a composition containing the components of the hot-melt adhesive except for the antibacterial agent, the resulting composition was placed in a sealed container and kneaded at 140°C for 1 hour, and then the presence or absence of deposits on a top plate of the container in which kneading was carried out was visually checked.

In a case where deposits were present on the top plate of the container, the deposits were collected, and an FT-IR spectrum was measured. A case where an absorption peak derived from the antibacterial agent was detected in the FT-IR spectrum was determined as the "presence" of vaporization, and a case where an absorption peak derived from the antibacterial agent was not detected was determined as the "absence" of vaporization.

### [Evaluation of coatability]

Whether the hot-melt adhesive could be melted at 140°C and applied by a coater was checked. A case where the hot-melt adhesive could be melted at 140°C and applied by a coater was rated as "good" coatability, and a case where the hot-melt adhesive was not melted at 140°C or a decrease in coatability such as poor discharge occurred was rated as "poor" coatability.

### [Measurement of melt viscosity of hot-melt adhesive]

In accordance with the measurement method described in JIS K 6682, the viscosities of respective molten products obtained by melting the hot-melt adhesive at 160°C, 140°C, and 120°C were measured using a Brookfield viscometer (rotor of spindle No. 27).

### [Evaluation of controlled release properties]

The test piece of Example 6 subjected to the above-described antibacterial test was taken out of a Petri dish, and the surface (upper surface) of the test piece on the side not in contact with the Petri dish was washed with 30 mL of acetone. Thereafter, the test piece was allowed to stand still for 3 days with the unwashed surface (lower surface) of the test piece in contact with a clean Petri dish, and then the above-described antibacterial properties test was conducted again. In a case where the test piece was evaluated as having antibacterial properties, the test piece was evaluated as having controlled release properties.

### [Preparation of hot-melt adhesive: Example 1]

The materials with the compositions (unit: parts by weight) shown in Tables 1 and 2 were kneaded to prepare the hot-melt adhesive of Example 1. The specific procedure is as follows.
(1) A tackifier, an antioxidant, and a plasticizer with the compositions shown in Table 1 were introduced into a kneader. These materials were heat-kneaded at 170°C to 180°C and sufficiently melted.
(2) Into the obtained molten product, a base polymer with the composition shown in Table 1 was introduced. The base polymer was uniformly dispersed in the molten product by heat-kneading at 170°C to 180°C. In this manner, Composition 1 was obtained.
(3) The set temperature of the kneader was lowered to 140°C. After the temperature in the kneader reached 140°C, an antibacterial agent in the amount (unit: parts by weight) shown in Table 2 where the weight of Composition 1 was regarded as 100 parts by weight was introduced, and kneading was carried out at 140°C at a rotation speed of 120 rpm for 1 hour to obtain a hot-melt adhesive.

The obtained hot-melt adhesive was evaluated for melt viscosity, compatibility, vaporization during preparation of the hot-melt adhesive, coatability, and antibacterial properties. The results and the saturated hydrocarbon ratio of the hot-melt adhesive are shown in Table 2. In Table 2, a slash indicates that measurement was not carried out.

**(Table 1)**

| | Manufacturer name | Trade name | Structure | Blending amount (parts by weight) | Saturated hydrocarbon ratio | |
|---|---|---|---|---|---|---|
| Composition 1 | Asahi Kasei Corp. | ASAPRENE T-420 | SBS | 19 | 0 | Base polymer |
| | Arakawa Chemical Industries, Ltd. | ARKON M-100 | Partially hydrogenated C9 petroleum resin | 59 | 59 | Tackifier |
| | Idemitsu Kosan Co., Ltd. | Diana Fresia W-90 | Paraffinic oil | 21 | 96 | Plasticizer |
| | BASF Japan Ltd. | Irganox 1010 | Phenol-based antioxidant | 1 | | Antioxidant |
| Composition 2 | Asahi Kasei Corp. | ASAPRENE T-439 | SBS | 11 | 0 | Base polymer |
| | LCY Chemical Corp. | GROBALPLENE 3522 | SBS | 6 | 0 | Base polymer |
| | Arakawa Chemical Industries, Ltd. | ARKON M-100 | Partially hydrogenated C9 petroleum resin | 66 | 59 | Tackifier |
| | Idemitsu Kosan Co., Ltd. | Diana Fresia W-90 | Paraffinic oil | 17 | 96 | Plasticizer |
| | BASF Japan Ltd. | Irganox 1010 | Phenol-based antioxidant | 1 | | Antioxidant |
| Composition 3 | Asahi Kasei Corp. | ASAPRENE T-439 | SBS | 14 | 0 | Base polymer |
| | Zeon Corp. | QUINTAC 3460 | SIS | 15 | 0 | Base polymer |
| | Idemitsu Kosan Co., Ltd. | I-MARV S-100 | Hydrogenated DCPD resin | 56 | 86 | Tackifier |
| | Idemitsu Kosan Co., Ltd. | Diana Fresia W-90 | Paraffinic oil | 5.5 | 96 | Plasticizer |
| | Nynas | Nyflex 223 | Naphthenic oil | 10 | 99 | Plasticizer |
| | BASF Japan Ltd. | Irganox 1010 | Phenol-based antioxidant | 1 | | Antioxidant |
| Composition 4 | LCY Chemical Corp. | GROBALPLENE 3501 | SBS | 10 | 0 | Base polymer |
| | LCY Chemical Corp. | GROBALPLENE 3545 | SBS | 17 | 0 | Base polymer |
| | Arakawa Chemical Industries, Ltd. | ARKON M-100 | Partially hydrogenated C9 petroleum resin | 65 | 59 | Tackifier |
| | Idemitsu Kosan Co., Ltd. | Diana Fresia W-90 | Paraffinic oil | 9 | 96 | Plasticizer |
| | BASF Japan Ltd. | Irganox 1010 | Phenol-based antioxidant | 1 | | Antioxidant |
| Composition 5 | Kuraray Co., Ltd. | SEPTON 2063 | SEPS | 15 | 87 | Base polymer |
| | Arakawa Chemical Industries, Ltd. | ARKON P-100 | Hydrogenated C9 petroleum resin | 35 | 100 | Tackifier |
| | NOF Corp. | POLYBUTENE 40SH | Polybutene | 50 | 100 | Plasticizer |
| | BASF Japan Ltd. | Irganox 1010 | Phenol-based antioxidant | 1 | | Antioxidant |
| Composition 6 | Synthomer | Aerafin 17 | APAO | 0.5 | 100 | Base polymer |
| | Idemitsu Kosan Co., Ltd. | L-MODU S400 | Olefin-based polymer | 19 | 100 | Base polymer |
| | ExxonMobil | Vistamaxx 6202 | Olefin-based polymer | 6 | 100 | Base polymer |
| | ENEOS Corp. | T-REZ HA125 | Hydrogenated DCPD resin | 40 | 100 | Tackifier |
| | NOF Corp. | POLYBUTENE 10N | Polybutene | 35 | 100 | Plasticizer |
| | S. KATO & CO. | SASOLWAX H-1 | FT wax | 0.8 | 100 | Wax |
| | BASF Japan Ltd. | Irganox 1010 | Phenol-based antioxidant | 1 | | Antioxidant |
| Composition 7 | Tosoh Corp. | Ultrathene 685 | Ethylene-vinyl acetate copolymer | 39 | 86 | Base polymer |
| | Arakawa Chemical Industries, Ltd. | ARKON P-100 | Hydrogenated C9 petroleum resin | 52 | 100 | Tackifier |
| | Evonik Japan Co., Ltd. | VESTOPLAST 703 | APAO | 2 | 100 | Base polymer |
| | S. KATO & CO. | SASOLWAX H-1 | FT wax | 7 | 100 | Wax |
| | BASF Japan Ltd. | Irganox 1010 | Phenol-based antioxidant | 1 | | Antioxidant |
| Composition 8 | Kuraray Co., Ltd. | KURARITY LA3710 | Acrylic polymer | 40 | 0 | Base polymer |
| | Arakawa Chemical Industries, Ltd. | Super Ester A-100 | Rosin ester | 30 | 0 | Tackifier |
| | Hokoku Corp. | DOS | Ester oil | 30 | 0 | Plasticizer |
| | BASF Japan Ltd. | Irganox 1010 | Phenol-based antioxidant | 1 | | Antioxidant |

**(Table 2)**

| | | | | Ex. 1 | Ex. 2 | Ex. 3 | Ex. 4 |
|---|---|---|---|---|---|---|---|
| | | Composition 1 | Base polymer: unhydrogenated styrene-based block copolymer | 100 | 100 | 100 | 100 |
| | | Composition 2 | Base polymer: unhydrogenated styrene-based block copolymer | | | | |
| | | Composition 3 | Base polymer: unhydrogenated styrene-based block copolymer | | | | |
| Hot-melt adhesive | Composition (parts by weight) | Composition 4 | Base polymer: unhydrogenated styrene-based block copolymer | | | | |
| | | Composition 5 | Base polymer: hydrogenated styrene-based block copolymer | | | | |
| | | Composition 6 | Base polymer: olefin-based polymer | | | | |
| | | Composition 7 | Base polymer: ethylene-vinyl acetate copolymer | | | | |
| | | Composition 8 | Base polymer: acrylic polymer | | | | |

| | | | | | | | |
|---|---|---|---|---|---|---|---|
| "Ex." stands for "Example". | | | | | | | |

**(Table 2) (Cont.)**

| | | | | Ex. 1 | Ex. 2 | Ex. 3 | Ex. 4 |
|---|---|---|---|---|---|---|---|
| Hot-melt adhesive | Antibacterial agent (parts by weight) | NHPB | T10: 210.3°C | 1.0 | 1.2 | 1.5 | 2.0 |
| | | EHPB | T10: 208.6°C | | | | |
| | | CEPB | T10: 271.0°C | | | | |
| | | POB-Bz | T10: 238.2°C | | | | |
| | | PPB | T10: 185.1°C | | | | |
| | | BPB | T10: 193.4°C | | | | |
| | | Biosaido TB-B10K (inorganic antibacterial agent) | | | | | |
| | | 1-ethyl-3-methylimidazolium p-toluenesulfonate (ionic antibacterial agent) | | | | | |
| | Saturated hydrocarbon ratio [% by weight] | | | 55 | 55 | 55 | 55 |
| Evaluation results of hot-melt adhesive | Melt viscosity [mPa·s] | 160°C | | 2560 | 2455 | 2400 | 2075 |
| | | 140°C | | 5388 | 5163 | 4838 | 4138 |
| | | 120°C | | 14950 | 14330 | 13430 | 11800 |
| | Compatibility | | | A | A | A | A |
| | Vaporization during preparation of hot-melt adhesive | | | Absent | Absent | Absent | Absent |
| | Coatability | | | Good | Good | Good | Good |

| | | | | | | | |
|---|---|---|---|---|---|---|---|
| "Ex." stands for "Example". | | | | | | | |

**(Table 2) (Cont.)**

| | | | | Ex. 1 | Ex. 2 | Ex. 3 | Ex.4 |
|---|---|---|---|---|---|---|---|
| | | Escherichia coli | Viable cell count immediately after inoculation [cells/cm²] | 8880 | | 23600 | 17800 |
| | | | Viable cell count of untreated test piece after 24 hours [cells/cm²] | 317000 | | 500000 | 1340000 |
| | | | Viable cell count of antibacterial-treated test piece after 24 hours [cells/cm²] | 6690 | | 4510 | 46 |
| | | | Antibacterial activity value R | 1.7 | | 2.0 | 4.5 |
| | | | Antibacterial properties [%] | 98 | | ≥ 99 | ≥ 99 |
| | | Staphylococcus aureus | Viable cell count immediately after inoculation [cells/cm²] | 9170 | | 22200 | 26100 |
| Evaluation results of hot-melt adhesive | Antibacterial properties | | Viable cell count of untreated test piece after 24 hours [cells/cm²] | 33800 | | 250000 | 36600 |
| | | | Viable cell count of antibacterial-treated test piece after 24 hours [cells/cm²] | 8 | | 1 | 1 |
| | | | Antibacterial activity value R | 3.6 | | 5.4 | 4.6 |
| | | | Antibacterial properties [%] | ≥ 99 | | ≥ 99 | ≥ 99 |
| | | Candida | Viable cell count immediately after inoculation [cells/cm²] | | | 38800 | 39100 |
| | | | Viable cell count of untreated test piece after 24 hours [cells/cm²] | | | 45800 | 43300 |
| | | | Viable cell count of antibacterial-treated test piece after 24 hours [cells/cm²] | | | 8 | 1 |
| | | | Antibacterial activity value R | | | 3.8 | 4.6 |
| | | | Antibacterial properties [%] | | | ≥ 99 | ≥ 99 |

| | | | | | | | |
|---|---|---|---|---|---|---|---|
| "Ex." stands for "Example". | | | | | | | |

**(Table 2) (Cont.)**

| | | | | Ex. 5 | Ex. 6 | Ex. 7 | Ex. 8 |
|---|---|---|---|---|---|---|---|
| | | Composition 1 | Base polymer: unhydrogenated styrene-based block copolymer | 100 | | | |
| | | Composition 2 | Base polymer: unhydrogenated styrene-based block copolymer | | 100 | | |
| | | Composition 3 | Base polymer: unhydrogenated styrene-based block copolymer | | | 100 | |
| Hot-melt adhesive | Composition (parts by weight) | Composition 4 | Base polymer: unhydrogenated styrene-based block copolymer | | | | |
| | | Composition 5 | Base polymer: hydrogenated styrene-based block copolymer | | | | 100 |
| | | Composition 6 | Base polymer: olefin-based polymer | | | | |
| | | Composition 7 | Base polymer: ethylene-vinyl acetate copolymer | | | | |
| | | Composition 8 | Base polymer: acrylic polymer | | | | |

| | | | | | | | |
|---|---|---|---|---|---|---|---|
| "Ex." stands for "Example". | | | | | | | |

**(Table 2) (Cont.)**

| | | | | Ex. 5 | Ex. 6 | Ex. 7 | Ex. 8 |
|---|---|---|---|---|---|---|---|
| Hot-melt adhesive | Antibacterial agent (parts by weight) | NHPB | T10: 210.3°C | 3.0 | 1.5 | 1.5 | 1.5 |
| | | EHPB | T10: 208.6°C | | | | |
| | | CEPB | T10: 271.0°C | | | | |
| | | POB-Bz | T10: 238.2°C | | | | |
| | | PPB | T10: 185.1°C | | | | |
| | | BPB | T10: 193.4°C | | | | |
| | | Biosaido TB-B10K (inorganic antibacterial agent) | | | | | |
| | | 1-ethyl-3-methylimidazolium p-toluenesulfonate (ionic antibacterial agent) | | | | | |
| | Saturated hydrocarbon ratio [% by weight] | | | 55 | 55 | 63 | 97 |
| Evaluation results of hot-melt adhesive | Melt viscosity [mPa·s] | 160°C | | 1995 | 755 | 4325 | 1900 |
| | | 140°C | | 3950 | 1503 | 10930 | 4300 |
| | | 120°C | | 11030 | 4063 | 56630 | 21300 |
| | Compatibility | | | A | A | A | A |
| | Vaporization during preparation of hot-melt adhesive | | | Absent | Absent | Absent | Absent |
| | Coatability | | | Good | Good | Good | Good |

| | | | | | | | |
|---|---|---|---|---|---|---|---|
| "Ex." stands for "Example". | | | | | | | |

**(Table 2) (Cont.)**

| | | | | Ex. 5 | Ex. 6 | Ex. 7 | Ex. 8 |
|---|---|---|---|---|---|---|---|
| | | Escherichia coli | Viable cell count immediately after inoculation [cells/cm²] | 17800 | 27000 | 27000 | 27000 |
| | | | Viable cell count of untreated test piece after 24 hours [cells/cm²] | 1340000 | 550000 | 550000 | 550000 |
| | | | Viable cell count of antibacterial-treated test piece after 24 hours [cells/cm²] | 1 | 761 | 25492 | 1022 |
| | | | Antibacterial activity value R | 6.1 | 2.9 | 1.3 | 2.7 |
| | | | Antibacterial properties [%] | ≥ 99 | ≥ 99 | 95 | ≥ 99 |
| | | Staphylococcus aureus | Viable cell count immediately after inoculation [cells/cm²] | 26100 | 45500 | 45500 | 45500 |
| Evaluation results of hot-melt adhesive | Antibacterial properties | | Viable cell count of untreated test piece after 24 hours [cells/cm²] | 36600 | 28600 | 28600 | 28600 |
| | | | Viable cell count of antibacterial-treated test piece after 24 hours [cells/cm²] | 1 | 1 | 1 | 1 |
| | | | Antibacterial activity value R | 4.6 | 4.5 | 4.5 | 4.5 |
| | | | Antibacterial properties [%] | ≥ 99 | ≥ 99 | ≥ 99 | ≥ 99 |
| | | Candida | Viable cell count immediately after inoculation [cells/cm²] | 39100 | 25000 | 25000 | 25000 |
| | | | Viable cell count of untreated test piece after 24 hours [cells/cm²] | 43300 | 61800 | 61800 | 61800 |
| | | | Viable cell count of antibacterial-treated test piece after 24 hours [cells/cm²] | 1 | 1 | 1 | 1 |
| | | | Antibacterial activity value R | 4.6 | 4.8 | 4.8 | 4.8 |
| | | | Antibacterial properties [%] | ≥ 99 | ≥ 99 | ≥ 99 | ≥ 99 |

| | | | | | | | |
|---|---|---|---|---|---|---|---|
| "Ex." stands for "Example". | | | | | | | |

**(Table 2) (Cont.)**

| | | | | Ex. 9 | Ex. 10 | Ex. 11 |
|---|---|---|---|---|---|---|
| | | Composition 1 | Base polymer: unhydrogenated styrene-based block copolymer | | | |
| | | Composition 2 | Base polymer: unhydrogenated styrene-based block copolymer | | | |
| | | Composition 3 | Base polymer: unhydrogenated styrene-based block copolymer | | | |
| Hot-melt adhesive | Composition (parts by weight) | Composition 4 | Base polymer: unhydrogenated styrene-based block copolymer | | | |
| | | Composition 5 | Base polymer: hydrogenated styrene-based block copolymer | | | |
| | | Composition 6 | Base polymer: olefin-based polymer | 100 | | |
| | | Composition 7 | Base polymer: ethylene-vinyl acetate copolymer | | 100 | |
| | | Composition 8 | Base polymer: acrylic polymer | | | 100 |

| | | | | | | |
|---|---|---|---|---|---|---|
| "Ex." stands for "Example". | | | | | | |

**(Table 2) (Cont.)**

| | | | | Ex. 9 | Ex. 10 | Ex. 11 |
|---|---|---|---|---|---|---|
| Hot-melt adhesive | Antibacterial agent (parts by weight) | NHPB | T10: 210.3°C | 1.5 | 1.5 | 1.5 |
| | | EHPB | T10: 208.6°C | | | |
| | | CEPB | T10: 271.0°C | | | |
| | | POB-Bz | T10: 238.2°C | | | |
| | | PPB | T10: 185.1°C | | | |
| | | BPB | T10: 193.4°C | | | |
| | | Biosaido TB-B10K (inorganic antibacterial agent) | | | | |
| | | 1-ethyl-3-methylimidazolium p-toluenesulfonate (ionic antibacterial agent) | | | | |
| | Saturated hydrocarbon ratio [% by weight] | | | 99 | 94 | 0 |
| Evaluation results of hot-melt adhesive | Melt viscosity [mPa·s] | 160°C | | 3095 | 863 | 3635 |
| | | 140°C | | 6325 | 1570 | 9275 |
| | | 120°C | | 16500 | 3455 | 51500 |
| | Compatibility | | | A | A | A |
| | Vaporization during preparation of hot-melt adhesive | | | Absent | Absent | Absent |
| | Coatability | | | Good | Good | Good |

| | | | | | | |
|---|---|---|---|---|---|---|
| "Ex." stands for "Example". | | | | | | |

**(Table 2) (Cont.)**

| | | | | Ex. 9 | Ex. 10 | Ex. 11 |
|---|---|---|---|---|---|---|
| | | Escherichia coli | Viable cell count immediately after inoculation [cells/cm²] | 27000 | 27000 | 27000 |
| | | | Viable cell count of untreated test piece after 24 hours [cells/cm²] | 550000 | 550000 | 550000 |
| | | | Viable cell count of antibacterial-treated test piece after 24 hours [cells/cm²] | 17 | 28 | 556333 |
| | | | Antibacterial activity value R | 4.5 | 4.3 | 0 |
| | | | Antibacterial properties [%] | ≥ 99 | ≥ 99 | - |
| | | Staphylococcus aureus | Viable cell count immediately after inoculation [cells/cm²] | 45500 | 45500 | 45500 |
| Evaluation results of hot-melt adhesive | Antibacterial properties | | Viable cell count of untreated test piece after 24 hours [cells/cm²] | 28600 | 28600 | 28600 |
| | | | Viable cell count of antibacterial-treated test piece after 24 hours [cells/cm²] | 12 | 1 | 13500 |
| | | | Antibacterial activity value R | 3.4 | 4.5 | 0.3 |
| | | | Antibacterial properties [%] | ≥ 99 | ≥ 99 | 53 |
| | | Candida | Viable cell count immediately after inoculation [cells/cm²] | 25000 | 25000 | 25000 |
| | | | Viable cell count of untreated test piece after 24 hours [cells/cm²] | 61800 | 61800 | 61800 |
| | | | Viable cell count of antibacterial-treated test piece after 24 hours [cells/cm²] | 1 | 169 | 25833 |
| | | | Antibacterial activity value R | 4.8 | 2.6 | 0.4 |
| | | | Antibacterial properties [%] | ≥ 99 | ≥ 99 | 58 |

| | | | | | | |
|---|---|---|---|---|---|---|
| "Ex." stands for "Example". | | | | | | |

### [Preparation of hot-melt adhesive: Examples 2 to 14 and Comparative Examples 1 to 5]

Hot-melt adhesives were obtained by carrying out the same operation as in Example 1 except that the materials and compositions were changed to the materials and compositions shown in Tables 1 to 3.

In a case where the components shown in Table 1 included a wax, the wax was introduced into the kneader together with the tackifier, the antioxidant, and the plasticizer in the above-described step (1), heat-kneaded at 170°C to 180°C, and sufficiently melted.

The obtained hot-melt adhesives were evaluated for melt viscosity, compatibility, vaporization during preparation of the hot-melt adhesive, coatability, and antibacterial properties. The results and the saturated hydrocarbon ratio of the hot-melt adhesives are shown in Table 2. Although the evaluation of antibacterial properties was not made in Example 2, the hot-melt adhesive is considered to have antibacterial properties against Escherichia coli and Staphylococcus aureus from the fact that a peak of the antibacterial agent was confirmed by FT-IR measurement on the hot-melt adhesive and from the results of Examples 1 and 3. In Table 2, "-" indicates a negative value for antibacterial properties. The evaluation of antibacterial properties was not made in Comparative Example 2 because phase separation and precipitation were observed, and the evaluation of antibacterial properties was not made in Comparative Examples 3 and 4 because vaporization of the antibacterial agent was observed during preparation of the hot-melt adhesive.

**(Table 3)**

| | | | | Ex. 12 | Ex. 13 | Ex. 14 | C. Ex. 1 |
|---|---|---|---|---|---|---|---|
| | | Composition 1 | Base polymer: unhydrogenated styrene-based block copolymer | 100 | 100 | 100 | 100 |
| | | Composition 2 | Base polymer: unhydrogenated styrene-based block copolymer | | | | |
| | | Composition 3 | Base polymer: unhydrogenated styrene-based block copolymer | | | | |
| Hot-melt adhesive | Composition (parts by weight) | Composition 4 | Base polymer: unhydrogenated styrene-based block copolymer | | | | |
| | | Composition 5 | Base polymer: hydrogenated styrene-based block copolymer | | | | |
| | | Composition 6 | Base polymer: olefin-based polymer | | | | |
| | | Composition 7 | Base polymer: ethylene-vinyl acetate copolymer | | | | |
| | | Composition 8 | Base polymer: acrylic polymer | | | | |

| | | | | | | | |
|---|---|---|---|---|---|---|---|
| "Ex." stands for "Example". "C. Ex." stands for "Comparative Example". | | | | | | | |

**(Table 3) (Cont.)**

| | | | | Ex. 12 | Ex. 13 | Ex. 14 | C. Ex. 1 |
|---|---|---|---|---|---|---|---|
| **Hot-melt** adhesive | Antibacterial agent (parts by weight) | NHPB | T10: 210.3°C | | | | |
| | | EHPB | T10: 208.6°C | 1.5 | | | |
| | | CEPB | T10: 271.0°C | | 1.5 | | |
| | | POB-Bz | **T10:** 238.2°C | | | 1.5 | |
| | | PPB | T10: 185.1°C | | | | |
| | | BPB | T10: 193.4°C | | | | |
| | | Biosaido TB-B10K (inorganic antibacterial agent) | | | | | 1.0 |
| | | 1-ethyl-3-methylimidazolium p-toluenesulfonate (ionic antibacterial agent) | | | | | |
| | Saturated hydrocarbon ratio [% by weight] | | | 55 | 55 | 55 | 55 |
| Evaluation results of hot-melt adhesive | Melt viscosity [mPa·s] | 160°C | | 2175 | 2240 | 2275 | 2700 |
| | | 140°C | | 4463 | 4750 | 4775 | 5575 |
| | | 120°C | | 12750 | 13800 | 15730 | 16500 |
| | Compatibility | | | A | A | A | B |
| | Vaporization during preparation of hot-melt adhesive | | | Absent | Absent | Absent | Absent |
| | Coatability | | | Good | Good | Good | Good |

| | | | | | | | |
|---|---|---|---|---|---|---|---|
| "Ex." stands for "Example". "C. Ex." stands for "Comparative Example". | | | | | | | |

**(Table 3) (Cont.)**

| | | | | Ex. 12 | Ex. 13 | Ex. 14 | C. Ex. 1 |
|---|---|---|---|---|---|---|---|
| | | Escherichia coli | Viable cell count immediately after inoculation [cells/cm²] | 30300 | 30300 | 30300 | 8880 |
| | | | Viable cell count of untreated test piece after 24 hours [cells/cm²] | 1280000 | 1280000 | 1280000 | 317000 |
| | | | Viable cell count of antibacterial-treated test piece after 24 hours [cells/cm²] | 570000 | 698000 | 250667 | 13 |
| | | | Antibacterial activity value R | 0.4 | 0.3 | 0.7 | 4.4 |
| | | | Antibacterial properties [%] | 55 | 45 | 80 | ≥ 99 |
| | | Staphylococcus aureus | Viable cell count immediately after inoculation [cells/cm²] | 37200 | 37200 | 37200 | 9170 |
| Evaluation results of hot-melt adhesive | Antibacterial properties | | Viable cell count of untreated test piece after 24 hours [cells/cm²] | 33000 | 33000 | 33000 | 33800 |
| | | | Viable cell count of antibacterial-treated test piece after 24 hours [cells/cm²] | 1 | 16900 | 14 | 12 |
| | | | Antibacterial activity value R | 4.5 | 0.3 | 3.4 | 3.4 |
| | | | Antibacterial properties [%] | ≥ 99 | 49 | ≥ 99 | ≥ 99 |
| | | Candida | Viable cell count immediately after inoculation [cells/cm²] | 38800 | 38800 | 38800 | |
| | | | Viable cell count of untreated test piece after 24 hours [cells/cm²] | 45800 | 45800 | 45800 | |
| | | | Viable cell count of antibacterial-treated test piece after 24 hours (cells/cm²] | 22647 | 26267 | 30 | |
| | | | Antibacterial activity value R | 0.3 | 0.2 | 3.2 | |
| | | | Antibacterial properties [%] | 51 | 43 | ≥ 99 | |

| | | | | | | | |
|---|---|---|---|---|---|---|---|
| "Ex." stands for "Example". "C. Ex." stands for "Comparative Example". | | | | | | | |

**(Table 3) (Cont.)**

| | | | | C. Ex. 2 | C. Ex. 3 | C. Ex. 4 | C. Ex. 5 |
|---|---|---|---|---|---|---|---|
| | | Composition 1 | Base polymer: unhydrogenated styrene-based block copolymer | 100 | 100 | 100 | |
| | | Composition 2 | Base polymer: unhydrogenated styrene-based block copolymer | | | | |
| | | Composition 3 | Base polymer: unhydrogenated styrene-based block copolymer | | | | |
| Hot-melt adhesive | Composition (parts by weight) | Composition 4 | Base polymer: unhydrogenated styrene-based block copolymer | | | | 100 |
| | | Composition 5 | Base polymer: hydrogenated styrene-based block copolymer | | | | |
| | | Composition 6 | Base polymer: olefin-based polymer | | | | |
| | | Composition 7 | Base polymer: ethylene-vinyl acetate copolymer | | | | |
| | | Composition 8 | Base polymer: acrylic polymer | | | | |

| | | | | | | | |
|---|---|---|---|---|---|---|---|
| "C. Ex." stands for "Comparative Example". | | | | | | | |

**(Table 3) (Cont.)**

| | | | | C. Ex. 2 | C. Ex. 3 | C. Ex. 4 | C. Ex. 5 |
|---|---|---|---|---|---|---|---|
| Hot-melt adhesive | Antibacterial agent (parts by weight) | NHPB | T10: 210.3°C | | | | 1.5 |
| | | EHPB | T10: 208.6°C | | | | |
| | | CEPB | T10: 271.0°C | | | | |
| | | POB-Bz | T10: 238.2°C | | | | |
| | | PPB | T10: 185.1 °C | | 1.5 | | |
| | | BPB | T10: 193.4°C | | | 1.5 | |
| | | Biosaido TB-B10K (inorganic antibacterial agent) | | | | | |
| | | 1-ethyl-3-methylimidazolium p-toluenesulfonate (ionic antibacterial agent) | | 1.5 | | | |
| | Saturated hydrocarbon ratio [% by weight] | | | 55 | 55 | 55 | 46 |
| Evaluation results of hot-melt adhesive | Melt viscosity [mPa·s] | 160°C | | 2580 | 2250 | 2295 | 10780 |
| | | 140°C | | 5450 | 4638 | 4738 | 27900 |
| | | 120°C | | 17300 | 14350 | 14130 | 120500 |
| | Compatibility | | | B | A | A | A |
| | Vaporization during preparation of hot-melt adhesive | | | Absent | Present | Present | Absent |
| | Coatability | | | Good | Good | Good | Poor |

| | | | | | | | |
|---|---|---|---|---|---|---|---|
| "C. Ex." stands for "Comparative Example". | | | | | | | |

**(Table 3) (Cont.)**

| | | | | C. Ex. 2 | C. Ex. 3 | C. Ex. 4 | C. Ex. 5 |
|---|---|---|---|---|---|---|---|
| | | Escherichia coli | Viable cell count immediately after inoculation [cells/cm²] | | | | 27000 |
| | | | Viable cell count of untreated test piece after 24 hours [cells/cm²] | | | | 550000 |
| | | | Viable cell count of antibacterial-treated test piece after 24 hours [cells/cm²] | | | | 134333 |
| | | | Antibacterial activity value R | | | | 0.6 |
| | | | Antibacterial properties [%] | | | | 76 |
| | | Staphylococcus aureus | Viable cell count immediately after inoculation [cells/cm²] | | | | 45500 |
| Evaluation results of hot-melt adhesive | Antibacterial properties | | Viable cell count of untreated test piece after 24 hours [cells/cm²] | | | | 28600 |
| | | | Viable cell count of antibacterial-treated test piece after 24 hours [cells/cm²] | | | | 1 |
| | | | Antibacterial activity value R | | | | 4.5 |
| | | | Antibacterial properties [%] | | | | ≥ 99 |
| | | Candida | Viable cell count immediately after inoculation [cells/cm²] | | | | 25000 |
| | | | Viable cell count of untreated test piece after 24 hours [cells/cm²] | | | | 61800 |
| | | | Viable cell count of antibacterial-treated test piece after 24 hours [cells/cm²] | | | | 1 |
| | | | Antibacterial activity value R | | | | 4.8 |
| | | | Antibacterial properties [%] | | | | ≥ 99 |

| | | | | | | | |
|---|---|---|---|---|---|---|---|
| "C. Ex." stands for "Comparative Example". | | | | | | | |

### [Summary]

The hot-melt adhesives of Comparative Examples 1 and 2, which contain an inorganic antibacterial agent and an ionic antibacterial agent in amounts of 1 part by weight and 1.5 parts by weight, respectively, relative to 100 parts by weight of Composition 1, underwent phase separation and precipitation. This is considered to be because the compatibility between the antibacterial agent and the components of the hot-melt adhesive except for the antibacterial agent was poor. In contrast, the hot-melt adhesives of Examples 1 and 3, which had the same composition except that an antibacterial agent having a paraben structure and having a T10 of not lower than 200°C was blended in the same blending amount instead of the inorganic antibacterial agent or the ionic antibacterial agent, had good compatibility.

In the hot-melt adhesives of Examples 3 and 12 to 14, which each contained an antibacterial agent having a paraben structure and having a T10 of not lower than 200°C in an amount of 1.5 parts by weight relative to 100 parts by weight of Composition 1, vaporization of the antibacterial agent during preparation of the hot-melt adhesive was not observed, and the hot-melt adhesives of Examples 3 and 12 to 14 were confirmed to have antibacterial properties. On the other hand, in the hot-melt adhesives of Comparative Examples 3 and 4, which had the same composition except that an antibacterial agent having a paraben structure and having a T10 of lower than 200°C was blended in the same blending amount instead of the antibacterial agent having a T10 of not lower than 200°C, vaporization of the antibacterial agent during preparation of the hot-melt adhesive was confirmed. When a hot-melt adhesive is applied to a base material, the hot-melt adhesive is heated for a long time in an open state; therefore, the hot-melt adhesives of Comparative Examples 3 and 4 are considered difficult to exhibit stable antibacterial properties and unsuitable for use.

In addition, the results of Examples 1 and 6 to 11, in which the compositions of the base polymer, tackifier, and the like were changed, confirmed that hot-melt adhesives containing an antibacterial agent having a paraben structure and having a T10 of not lower than 200°C have antibacterial properties even when the compositions of the base polymer, tackifier, and the like are different.

Comparison between Example 11 and the other Examples shows that a hot-melt adhesive having a higher saturated hydrocarbon ratio defined by formula (1) has higher antibacterial properties and more readily exhibits the effect of the antibacterial agent.

With use of a test piece prepared using the hot-melt adhesive of Example 6, evaluation of controlled release properties was made after the antibacterial test. As a result, the test piece had antibacterial properties even during the evaluation of controlled release properties made after the surface of the test piece was washed. From this fact, the hot-melt adhesive of Example 6 was found to have controlled release properties.

### Industrial Applicability

According to an aspect of the present invention, it is possible to provide an antibacterial hot-melt adhesive that does not undergo phase separation even when heated for a long time, has high safety for the human body, and is capable of retaining stable antibacterial properties even when heated for a long time. Thus, an aspect of the present invention can be used in the production of sanitary articles (such as paper diapers, sanitary napkins, pet sheets, urine pads, and breast milk pads), industrial filters for air conditioners, air purifiers, and the like, and bath mats.

## Claims

1. A hot-melt adhesive comprising:
a base polymer;
a tackifier; and
an antibacterial agent having a paraben structure and having a 10% weight loss temperature of not lower than 200°C in thermogravimetric measurement,
said hot-melt adhesive having a melt viscosity at 140°C of not more than 20,000 mPa·s.

2. The hot-melt adhesive according to claim 1, wherein said hot-melt adhesive has a saturated hydrocarbon ratio of not less than 25% by weight, the saturated hydrocarbon ratio defined by the following formula (1):
saturated hydrocarbon ratio [% by weight] = total sum of [saturated hydrocarbon ratio of each of predetermined constituent components × (parts by weight of a corresponding one of the constituent components/total parts by weight of said hot-melt adhesive)] × 100 ... (1), wherein
in the formula (1), the predetermined constituent components are the base polymer and the tackifier, which constitute said hot-melt adhesive, and, in a case where a plasticizer and/or a wax is/are included in said hot-melt adhesive, the plasticizer and/or the wax,
in the formula (1), the saturated hydrocarbon ratio of each of the predetermined constituent components is any of the following ratios (a) and (b) of saturated hydrocarbon portions contained in the corresponding one of the predetermined constituent components:
(a) the saturated hydrocarbon ratio of the base polymer is a ratio (% by weight) of repeating units consisting only of saturated hydrocarbons in the base polymer; and
(b) the saturated hydrocarbon ratio of the tackifier, the plasticizer, or the wax is a ratio (% by weight) of saturated hydrocarbon portions in a hydrocarbon compound consisting only of carbon atoms and hydrogen atoms.

3. The hot-melt adhesive according to claim 1, wherein the amount of addition of the antibacterial agent is not less than 1% by weight relative to the hot-melt adhesive.

4. A sanitary article comprising the hot-melt adhesive according to any one of claims 1 to 3.

5. A method for producing a hot-melt adhesive, said method comprising
a step of kneading an antibacterial agent having a paraben structure and having a 10% weight loss temperature of not lower than 200°C in thermogravimetric measurement and a composition containing a base polymer and a tackifier, while maintaining a temperature of not higher than 140°C.

6. A method for applying a hot-melt adhesive, said method comprising
an application step of melting, at a temperature of not higher than 140°C, a hot-melt adhesive containing an antibacterial agent having a paraben structure and having a 10% weight loss temperature of not lower than 200°C in thermogravimetric measurement, a base polymer, and a tackifier, and applying the molten hot-melt adhesive to a base material.
